# EUROPÄISCHE PATENTSCHRIFT

(11) **EP 2 882 969 B1**
(45) Veröffentlichungstag und Bekanntmachung des Hinweises auf die Patenterteilung: **28.09.2016**
(21) Anmeldenummer: 13744975.7
(22) Anmeldetag: 02.08.2013
(51) Int. Cl.: F16B 13/12

(54) **SPREIZDÜBEL**
EXPANSION ANCHOR
CHEVILLE À EXPANSION

(30) Priorität: 07.08.2012 DE 102012107235; 21.11.2012 DE 102012111220
(43) Veröffentlichungstag der Anmeldung: 17.06.2015
(73) Patentinhaber: fischerwerke GmbH & Co. KG, 72178 Waldachtal (DE)
(72) Erfinder: DALY, Aaron, 72285 Pfalzgrafenweiler (DE)
(74) Vertreter: Suchy, Ulrich Johannes
(86) Internationale Anmeldenummer: PCT/EP2013/002309
(87) Internationale Veröffentlichungsnummer: WO 2014/023409

(56) Entgegenhaltungen:
- WO-A1-2005/106259
- DE-A1-102011 000 537

## Beschreibung

Die Erfindung betrifft einen Spreizdübel mit den Merkmalen des Oberbegriffs des Anspruchs 1

(WO 2005/106259 A1). Spreizdübel, insbesondere aus Kunststoff zum Aufspreizen mit einer Schraube oder einem Nagel, sind bekannt. Die Patentschrift DE 32 08 347 C1 offenbart einen Spreizdübel mit einer Tannenbaumprofilierung, die durch axial aufeinander folgende Kegelstümpfe gebildet ist, an deren durchmessergrößerem Ende sich kurze zylindrische Abschnitte anschließen, von denen sich der Dübel mit einer Ringstufe zum durchmesserkleineren Ende eines nächsten Kegelstumpfs verjüngt. In Seitenansicht weist der bekannte Spreizdübel ein Sägezahnprofil auf, dessen Zähne vergleichbar Widerhaken nach hinten, d. h. einer Ausziehrichtung des Spreizdübels entgegengerichtet sind.

Aufgabe der Erfindung ist, einen Spreizdübel mit erhöhter Verankerungskraft in weichen Baustoffen, beispielsweise in Porenbeton, vorzuschlagen.

Diese Aufgabe wird erfindungsgemäß durch die Merkmale des Anspruchs 1 gelöst. Der erfindungsgemäße Spreizdübel mit den Merkmalen des Anspruchs 1 weist Halteflächen auf, die umgekehrt orientiert sind wie die Sägezahnprofilierung des bekannten Spreizdübels, d. h. die Halteflächen des erfindungsgemäßen Spreizdübels verlaufen von hinten nach vorn nach außen. Dabei ist hinten das Ende des Spreizdübels, das bei in einem Ankergrund gesetztem Spreizdübel zugänglich und durch das ein Spreizstift, beispielsweise ein Nagel oder eine Schraube, in den Spreizdübel einbringbar ist. Das vordere Ende befindet sich in einer Einbringrichtung des Spreizdübels in ein Loch in einem Ankergrund vorn. Mit außen ist eine radiale Richtung des Spreizdübels gemeint. In Umfangsrichtung des Spreizdübels erstrecken sich die Halteflächen über einen mehr oder weniger großen Umfangsabschnitt, sie sind vorzugsweise an einer oder mehreren Umfangsstellen unterbrochen, um den Spreizdübel leichter aufspreizen zu können. Die Halteflächen können in der Umfangsrichtung eben sein, vorzugsweise sind sie in Umfangsrichtung gewölbt. In der Dübellängsrichtung können die Halteflächen gerade, konvex oder konkav sein. Es ist vorzugsweise eine Anzahl Haltefläche in der Dübellängsrichtung hintereinander angeordnet. Die Halteflächen haben dabei in einem Längsprofil des Spreizdübels einen wesentlichen Anteil in einem Spreizbereich, vorzugsweise mehr als die Hälfte und insbesondere mehr als 70 % der Länge. Es hat sich gezeigt, dass die Umkehrung der Profilierung eine Verankerungskraft des Spreizdübels in beispielsweise Porenbeton erhöht. Die Erhöhung der Ankerkraft ist vermutlich darauf zurückzuführen, dass bei einer Beanspruchung des Spreizdübels in einer Ausziehrichtung die Halteflächen vergleichbar Keilen wirken, d. h. sie beaufschlagen eine Wandung eines Lochs, in dem der Spreizdübel aufgespreizt und verankert ist, mit einer nach außen gerichteten Druckkraft. Diese Druckbeaufschlagung erhöht eine Festigkeit des Porenbetons und wirkt einem Bruch von Wandungen von Poren des Porenbetons entgegen, wodurch der Halt des Spreizdübels erhöht ist.

Insbesondere verlaufen die Halteflächen des erfindungsgemäßen Spreizdübels in einem spitzen Winkel zur Dübellängsrichtung, der kleiner 45 Grad, insbesondere kleiner 30 Grad ist. Das bewirkt bei einer Kraft in Ausziehrichtung auf den Spreizdübel eine große, nach außen gerichtete Kraft an den Halteflächen im Verhältnis zu einer Kraft in der Dübellängsrichtung bzw. parallel zu den Halteflächen. Bei einer Beanspruchung des Spreizdübels in der Ausziehrichtung üben die Halteflächen aufgrund des spitzen Winkels eine hohe Druckkraft auf die umgebende Wandung aus, die beispielsweise in Porenbeton einem Ausbrechen entgegenwirkt.

Eine Ausgestaltung der Erfindung sieht vor, dass Halteflächen weiter vorn am Spreizdübel in der Dübellängsrichtung länger und/oder in einem kleineren Winkel zur Dübellängsrichtung bzw. dass Halteflächen weiter hinten am Spreizdübel in der Dübellängsrichtung kürzer bzw. in einem größeren, allerdings immer noch spitzen Winkel zur Dübellängsrichtung verlaufen. Diese Ausgestaltungen der Erfindung haben sich als vorteilhaft für eine hohe Verankerungskraft des Spreizdübels in beispielsweise Porenbeton herausgestellt. Vermutlich leisten die längeren und/oder in einem spitzeren Winkel zur Dübellängsrichtung verlaufenden vorderen Halteflächen einen höheren Beitrag zur Verankerungskraft des Spreizdübels als die kürzeren und/oder in einem kürzeren Winkel zur Dübellängsrichtung verlaufenden hinteren Halteflächen. Die vorderen Halteflächen befinden sich tiefer in einem Loch in einem Ankergrund, wo die Gefahr eines Ausbruchs von Material des Ankergrunds an einer Lochwand in Ausziehrichtung des Spreizdübels durch die hinteren Halteflächen bereits abgebaut ist.

Eine bevorzugte Ausgestaltung der Erfindung sieht vor, dass die Halteflächen mit diesen vorderen Enden an derselben zylindrischen Hüllfläche enden, sie reichen also alle gleich weit in radialer Richtung nach außen. Dadurch wird eine Anlage aller Halteflächen an einer Wandung eines zylindrischen Lochs erreicht.

An hinteren Enden reichen hintere Halteflächen bei einer Ausgestaltung der Erfindung weiter nach innen als vordere Halteflächen, d. h. an hinteren Enden hinterer Halteflächen ist der Spreizdübel stärker eingeschnürt als an hinteren Enden vorderer Halteflächen. Auch diese Ausgestaltung der Erfindung hat sich als vorteilhaft für eine hohe Verankerungskraft des Spreizdübels in Porenbeton herausgestellt.

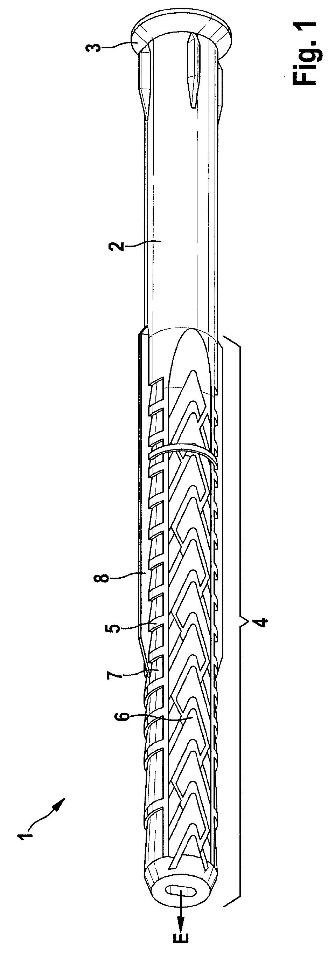

Die Erfindung wird nachfolgend anhand eines in der Zeichnung dargestellten Ausführungsbeispiels näher erläutert. Die einzige Figur zeigt einen erfindungsgemäßen Spreizdübel seitlich schräg von vorn.

Der in der Zeichnung dargestellte, erfindungsgemäße Spreizdübel 1 ist beispielsweise durch Spritzgießen aus Kunststoff hergestellt. Er ist hülsenförmig und weist einen rohrförmigen, in Umfangsrichtung geschlossenen Hohlschaft 2 in einem hinteren Bereich auf, der mit einem hohlkonischen Flansch 3 an einem hinteren Ende des Spreizdübels 1 endet. In Einbringrichtung vorn schließt sich ein Spreizbereich 4 an den Hohlschaft 2 an, wobei die "Einbringrichtung" E die Richtung ist, in der der Spreizdübel 1 bestimmungsgemäß in ein Bohrloch eingebracht wird. Über den Spreizbereich 4 erstrecken sich zwei Stege 5 in einer zur Einbringrichtung E parallelen Dübellängsrichtung bis zu einem vorderen Ende des Spreizdübels 1, wo sie ebenso wie hinten im Spreizbereich 4 am Übergang zum Hohlschaft 2 einstückig miteinander verbunden sind. Die Stege 5 sind einander gegenüberliegend an einem Umfang des Spreizdübels 1 angeordnet.

Von Längsseiten der Stege 5 stehen Spreizelemente 6 in entgegengesetzten Umfangsrichtungen des Spreizdübels 1 ab. Die Spreizelemente 6 stehen jeweils abwechselnd vom einen und vom anderen Steg 5 ab, so dass sie ähnlich einer Verzahnung oder Krampen eines Reißverschluss, allerdings mit Abstand voneinander zwischen einander greifen. Die Spreizelemente 6 sind hakenförmig, sie stehen schräg nach hinten von den Stegen 5 ab und weisen nach einer Abwinklung in einer Mitte zwischen den Stegen 5 des Spreizdübels 1 schräg nach vorn. Alternativ können die Spreizelemente 6 auch umgekehrt schräg nach vorn von den Stegen 5 abstehen und nach der Abwinklung schräg nach hinten weisen (nicht dargestellt). Die Spreizelemente 6 berühren einander nicht, sondern es bestehen wie erwähnt Abstände zwischen ihnen, wenn der Spreizdübel 1 unverformt ist. Durch ihre Hakenform hintergreifen die zwischeneinander greifenden Spreizelemente 6 einander und verbinden die Stege 5 - wegen der Abstände zwischen den Spreizelementen 6 - mit Spiel durch Formschluss miteinander.

Bei einer Biegung, Torsion oder einem Auseinanderbewegen der Stege 5 bewegen sich die Halteelemente 6 gegeneinander und gelangen in Anlage aneinander bzw. in formschlüssigen Hintergriff miteinander, wenn sich die Abstände zwischen ihnen auf null verkleinert haben. Dann übertragen die Halteelemente 6 Kräfte zwischen den Stegen 5 und setzen einer weiteren Bewegung der Stege 5 gegeneinander einen Widerstand entgegen. Der Spreizdübel 1 wird dadurch versteift, seine Biege- und seine Torsionssteifigkeit und eine Sicherheit gegen Ausknicken der Stege 5 sind erhöht.

An Außenseiten weisen die Stege 5 schräg in einem spitzen Winkel zu einer Dübellängsrichtung verlaufende Halteflächen 7 auf, die von hinten nach vorn schräg nach außen verlaufen, d. h. ein hinteres Ende der Halteflächen 7 ist bezüglich des Spreizdübels 1 weiter innen als ein vorderes Ende. Mit hinten ist das in Einbringrichtung E hintere, den hohlkonischen Flansch 3 aufweisende und eine Öffnung zum Einbringen eines nicht dargestellten Spreizstifts aufweisende Ende des Spreizdübels 1 gemeint. Das vordere Ende des Spreizdübels 1 ist in der Einbringrichtung E vorn, in der Zeichnung somit links. Im Ausführungsbeispiel weisen die Halteflächen 7 die Form von Kegelstumpfschalen auf, die sich in Umfangsrichtung über etwas weniger als ein Viertel des Umfangs erstrecken. Weder die Form noch die Erstreckung in Umfangsrichtung ist zwingend für die Erfindung. Von hinten nach vorn werden die Halteflächen 7 länger und der Winkel, in dem die Halteflächen 7 zu einer Dübellängsrichtung verlaufen, werden von hinten nach vorn kleiner. Alle Halteflächen 7 enden mit ihren vorderen Enden auf demselben Durchmesser, mit ihren hinteren Enden enden die Halteflächen 7 auf einem in der Dübellängsrichtung von hinten nach vorn zunehmend größeren Durchmesser, der allerdings stets kleiner als der Durchmesser an den vorderen Enden der Halteflächen 7 ist. Dadurch ist der Spreizdübel 7 an hinteren Enden der Halteflächen 7 an hinteren Halteflächen 7 stärker eingeschnürt als an vorderen Halteflächen 7. Die Halteflächen 7 nehmen rund 75 Prozent der Länge eines Längsprofils im Spreizbereich 4 ein. In Umfangsrichtung erstrecken sie sich jeweils über etwa 90 Grad.

Zum Aufspreizen wird ein nicht dargestellter Spreizstift, beispielsweise eine Spreizschraube, durch das offene, hintere Ende des Spreizdübels 1 im hohlkonischen Flansch 3 und durch den Hohlschaft 2 in den Spreizbereich 4 bis zum vorderen Ende in den Spreizdübel 1 eingeschraubt. Der Spreizstift kann am vorderen Ende aus dem Spreizdübel 1 austreten. Der Spreizstift drückt die Halteelemente 6 und die Stege 5 auseinander und nach außen, d. h. er spreizt den Spreizdübel 1 im Spreizbereich 4 auf. Er lässt sich dadurch in einem Loch in einem nicht dargestellten Ankergrund verankern. In einem weichen Baustoff, beispielsweise in Porenbeton, wirken die Halteflächen 7 wie Keilelemente: Bei einer Beanspruchung des Spreizdübels 1 in einer Ausziehrichtung aus dem Loch, in dem er verankert ist, beaufschlagen die Halteflächen 7 aufgrund ihres Verlaufs schräg in einem spitzen Winkel zur Dübellängsrichtung eine Lochwand mit einer hohen, nach außen gerichteten Druckkraft und einer im Verhältnis dazu kleinen Kraft in der Ausziehrichtung. An der Lochwand wird der Ankergrund dadurch im Wesentlichen auf Druck und nur in geringem Maß auf Scherung beansprucht, wodurch die Gefahr von Ausbrüchen des Ankergrunds an der Lochwand in einem weichen oder porösen Baustoff wie beispielsweise Porenbeton erheblich gemindert ist. In einem solchen Ankergrund ist eine Verankerungskraft des Spreizdübels 1 dadurch wesentlich erhöht.

Zur Sicherung gegen ein Mitdrehen des Spreizdübels 1 beim Einschrauben einer nicht dargestellten Spreizschraube weist der Spreizdübel 1 zwei Längsrippen 8 auf, die sich in Mitten der Stege 5 in einer Axialebene des Spreizdübels 1 über ungefähr ein mittleres Drittel einer Länge des Spreizdübels 1 erstrecken.

### Bezugszeichenliste

- 1: Spreizdübel
- 2: Hohlschaft
- 3: Flansch
- 4: Spreizbereich
- 5: Steg
- 6: Spreizelement
- 7: Haltefläche
- 8: Längsrippe
- E: Einbringrichtung

## Patentansprüche

1. Spreizdübel zum Aufspreizen mit einer Schraube oder einem Nagel, **gekennzeichnet durch** Halteflächen (7) außen am Spreizdübel (1), die in einer Dübellängsrichtung, die zu einer Einbringrichtung (E), in der der Spreizdübel (1) bestimmungsgemäß in ein Bohrloch eingebracht wird, parallel ist, von in Einbringrichtung (E) hinten nach in Einbringrichtung (E) vorn in einem spitzen Winkel, der kleiner 45 Grad ist, radial zur Dübellängsrichtung nach außen verlaufen.

2. Spreizdübel nach Anspruch 1, **dadurch gekennzeichnet, dass** die Halteflächen (7) in einem spitzen Winkel zur Dübellängsrichtung verlaufen, der kleiner 30 Grad ist.

3. Spreizdübel nach Anspruch 1 oder 2, **dadurch gekennzeichnet, dass** vordere Halteflächen (7) in der Dübellängsrichtung länger bzw. hintere Halteflächen (7) in der Dübellängsrichtung kürzer sind.

4. Spreizdübel nach einem der Ansprüche 1 - 3, **dadurch gekennzeichnet, dass** vordere Halteflächen (7) in einem spitzeren Winkel zur Dübellängsrichtung bzw. hintere Halteflächen (7) in einem stumpferen Winkel zur Dübellängsrichtung verlaufen.

5. Spreizdübel nach einem der Ansprüche 1 - 4, **dadurch gekennzeichnet, dass** die Halteflächen (7) mit ihren vorderen Enden radial zum Spreizdübel (1) gesehen an derselben zylindrischen Hüllfläche enden.

6. Spreizdübel nach einem der Ansprüche 1 - 5, **dadurch gekennzeichnet, dass** hintere Enden hinterer Halteflächen (7) radial weiter innen am Spreizdübel (1) bzw. hintere Enden vorderer Halteflächen (7) radial weiter außen am Spreizdübel (1) sind.

## Claims

1. Expansible fixing plug for expansion using a screw or a nail, **characterised by** holding surfaces (7) on the outside of the expansible fixing plug (1), which holding surfaces, in a longitudinal direction of the fixing plug parallel to a direction of introduction (E) in which the expansible fixing plug (1) is introduced into a drilled hole in the prescribed manner, extend in the radially outwards direction with respect to the longitudinal direction of the fixing plug from the rear in the direction of introduction (E) to the front in the direction of introduction (E) at an acute angle which is less than 45 degrees.

2. Expansible fixing plug according to claim 1, **characterised in that** the holding surfaces (7) extend at an acute angle to the longitudinal direction of the fixing plug, which angle is less than 30 degrees.

3. Expansible fixing plug according to claim 1 or 2, **characterised in that** front holding surfaces (7) in the longitudinal direction of the fixing plug are longer and/or rear holding surfaces (7) in the longitudinal direction of the fixing plug are shorter.

4. Expansible fixing plug according to one of claims 1 - 3, **characterised in that** front holding surfaces (7) extend at a more acute angle to the longitudinal direction of the fixing plug and/or rear holding surfaces (7) extend at a more obtuse angle to the longitudinal direction of the fixing plug.

5. Expansible fixing plug according to one of claims 1 - 4, **characterised in that** the front ends of the holding surfaces (7) end on the same cylindrical envelope surface, seen in a radial direction relative to the expansible fixing plug (1).

6. Expansible fixing plug according to one of claims 1 - 5, **characterised in that** rear ends of rear holding surfaces (7) are radially further in on the expansible fixing plug (1) and/or rear ends of front holding surfaces (7) are radially further out on the expansible fixing plug (1).

## Revendications

1. Cheville à expansion pour l'expansion avec une vis ou un clou, **caractérisée par** des surfaces de retenue (7) extérieurement sur la cheville à expansion (1), qui s'étendent dans une direction longitudinale de la cheville - laquelle est parallèle à une direction d'introduction (E) dans laquelle la cheville à expansion (1) est introduite conformément à sa destination dans un trou percé -, depuis l'arrière dans la direction d'introduction (E) vers l'avant dans la direction d'introduction (E), radialement à la direction longitudinale de la cheville vers l'extérieur sous un angle aigu qui est inférieur à 45 degrés.

2. Cheville à expansion selon la revendication 1, **caractérisée en ce que** les surfaces de retenue (7) s'étendent sous un angle aigu par rapport à la direction longitudinale de la cheville qui est inférieur à 30 degrés.

3. Cheville à expansion selon la revendication 1 ou 2, **caractérisée en ce que** des surfaces de retenue (7) avant dans la direction longitudinale de la cheville sont plus longues, ou encore des surfaces de retenue (7) arrière dans la direction longitudinale de la cheville sont plus courtes.

4. Cheville à expansion selon l'une des revendications 1 à 3, **caractérisée en ce que** des surfaces de retenue (7) avant s'étendent sous un angle plus aigu par rapport à la direction longitudinale de la cheville, ou encore des surfaces de retenue (7) arrière s'étendent sous un angle plus obtus par rapport à la direction longitudinale de la cheville.

5. Cheville à expansion selon l'une des revendications 1 à 4, **caractérisée en ce que** les surfaces de retenue (7) se terminent par leurs extrémités avant, considéré radialement à la cheville à expansion (1), sur la même surface enveloppante cylindrique.

6. Cheville à expansion selon l'une des revendications 1 à 5, **caractérisée en ce que** les extrémités arrière de surfaces de retenue (7) arrière se trouvent radialement plus à l'intérieur sur la cheville à expansion (1), ou encore les extrémités arrière de surfaces de retenue (7) avant se trouvent radialement plus à l'extérieur sur la cheville à expansion (1).
